# EUROPÄISCHE PATENTSCHRIFT

(11) **EP 2 909 256 B1**
(45) Veröffentlichungstag und Bekanntmachung des Hinweises auf die Patenterteilung: **12.07.2017**
(21) Anmeldenummer: 13791894.2
(22) Anmeldetag: 18.10.2013
(51) Int. Cl.: C08J 5/04, C08J 5/06, C08J 5/10, C08L 23/12

(54) **NACHWACHSENDE ROHSTOFFE ENTHALTENDER VERBUNDWERKSTOFF SOWIE VERFAHREN ZU SEINER HERSTELLUNG**
COMPOSITE COMPRISING RENEWABLE RAW MATERIAL AND A METHOD TO PRODUCE SAID COMPOSITE
MATÉRIAU COMPOSITE DE MATIÈRES PREMIÈRES RÉGÉNÉRANTES ET LE PROCÉDÉ DE SON FABRICATION

(30) Priorität: 22.10.2012 AT 11362012
(43) Veröffentlichungstag der Anmeldung: 26.08.2015
(73) Patentinhaber: Mondi AG, 1032 Wien (AT)
(72) Erfinder: RUEF, Walter, 9400 Wolfsberg (AT); GUNTSCHNIG, Christoph, 9421 Eitweg (AT)
(74) Vertreter: Cunow, Gerda
(86) Internationale Anmeldenummer: PCT/AT2013/000176
(87) Internationale Veröffentlichungsnummer: WO 2014/063175

(56) Entgegenhaltungen:
- DE-A1-102010 031 892
- US-A1- 2011 028 060
- XUE LI ET AL: "Chemical Treatments of Natural Fiber for Use in Natural Fiber-Reinforced Composites: A Review", JOURNAL OF POLYMERS AND THE ENVIRONMENT ; FORMERLY: 'JOURNAL OF ENVIRONMENTAL POLYMER DEGRADATION', KLUWER ACADEMIC PUBLISHERS-PLENUM PUBLISHERS, NE, Bd. 15, Nr. 1, 4. Januar 2007 (2007-01-04) , Seiten 25-33, XP019481860, ISSN: 1572-8900, DOI: 10.1007/S10924-006-0042-3
- Pflanzen Rohstoffe Produkte: "Naturfaserverstärkte Kunststoffe nachwachsende-rohstoffe.de", , 1. Januar 2008 (2008-01-01), XP055096659, Gefunden im Internet: URL:http://www.fnr-server.de/ftp/pdf/liter atur/pdf_227-brosch_nfk_2008.pdf [gefunden am 2014-01-15]

## Beschreibung

Die vorliegende Erfindung bezieht sich auf einen Verbundwerkstoff bestehend aus einem Kunststoff-Basismaterial gewählt aus Polypropylen, Polymilchsäure (PLA), Polymethylmetacrylat, ABS-Polycarbonat, Polyoxymethylen (POM), Polyethylen, und darin eingebetteten Partikeln oder Fasern aus nachwachsenden Rohstoffen, wie Abaca, Zellulosefasern, Zellstofffasern, Viskosefasern, Hanffasern oder Flachsfasern sowie gegebenenfalls einem Haftvermittler, sowie auf ein Verfahren zur Herstellung eines Verbundwerkstoffs, bei welchem in einer Mischvorrichtung Naturfasern, wie Zellulosefasern, Regeneratzellulosefasern, Zellstofffasern, Hanffasern oder Flachsfasern mit einem Kunststoff-Basismaterial gewählt aus Polypropylen, Polymilchsäure (PLA), Polymethylmetacrylat, ABS-Polycarbonat, Polyoxymethylen (POM), Polyethylen, sowie gegebenenfalls Zuschlagstoffen vermischt werden und in einer Formpresse oder auch Extruder zu einem Verbundwerkstoff verpresst werden.

Verbundmaterialien bzw. Compounds bestehend aus Kunststoffen, wie Polyolefinen, Polymethylmetacrylat (PMMA), Acrylnitril-Butadien-Styrol Copolymere (ABS usw.), welche Partikel oder Fasern aus nachwachsenden Rohstoffen, wie Zellstoff, Viskose, Hanf, Holz, Flachs usw. enthalten, sind in den verschiedensten Einsatzbereichen in Verwendung, wobei derartige Verbundmaterialien jedoch häufig große Mengen eines Haftvermittlers benötigen, um einen innigen Verbund zwischen den Partikeln oder Fasern aus nachwachsenden Rohstoffen und den Kunststoffen zur Verfügung zu stellen. Als Haftvermittler werden hierbei beispielsweise bei Polyolefinen, Maleinsäureanhydridgruppen auf Polypropylen oder Polyethylen gepfropft, verwendet, um eine ausreichende Verbindungsfähigkeit zwischen den Kunststoffen und den Partikeln oder Fasern aus nachwachsenden Rohstoffen erreichen zu können. Ein anderes Problem bei derartigen Verbundmaterialien ist jedoch, dass, sobald sie Partikel oder Fasern aus nachwachsenden Rohstoffen enthalten, die Schlagzähigkeit bzw. Kerbschlagzähigkeit der damit hergestellten Produkte drastisch absinkt, so dass der Einsatzzweck dieser Materialien begrenzt ist. Es wurden Versuche angestellt, eine Matrix aus Kunststoff und Partikeln oder Fasern aus nachwachsenden Rohstoffen mit Zusatz von weicheren Polymeren bzw. Polymeren mit niedrigeren Molekulargewichten weich zu machen, um die Schlagzähigkeit zu erhöhen, wobei jedoch dies nur begrenzte Erfolge zeigte, insbesondere dann, wenn nicht bereits ein weiches Grundpolymer zur Verfügung gestellt bzw. eingesetzt wurde. Um derartige Polymere auch in Einsatzgebieten, wie der Automobilindustrie, Elektro/Elektronikindustrie, Logistikindustrie zur Anwendung bringen zu können, ist es daher erforderlich, die Schlagzähigkeit bzw. Kerbschlagzähigkeit der mit Partikeln oder Fasern aus nachwachsenden Rohstoffen gefüllten bzw. mit Partikeln oder Fasern aus nachwachsenden Rohstoffen versetzten Verbundwerkstoffe deutlich zu erhöhen, ohne gleichzeitig andere Eigenschaften nachteilig zu beeinflussen.

Der WO 03/035393 A1 ist ein Kompositmaterial bestehend aus PVC und Holzfasern entnehmbar, in welchem zusätzlich Zuschlagstoffe, wie Polyester und ein Gleitmittel einhalten sein können. Der Zusatz von Polyvinylchlorid (PVC) zu den Holzfasern soll die Verarbeitbarkeit des herzustellenden Komposits erleichtern, da diese bei niedrigen Temperaturen verpressbar sein sollen.

Der US 2011028060 A1 sind Kompositstrukturen entnehmbar, enthaltend ein faseriges Material und eine Matrix-Harz-Zusammensetzung, welche Kompositstruktur neben einem faserigen Material eine Matrix-Harz-Zusammensetzung enthält, welche aus Polyamidzusammensetzungen besteht. Die Polyamidzusammensetzungen selbst sind gemäß diesem Dokument aus Polyamidharz und Polyalkoholen, die mehr als zwei Hydroxylgruppen aufweisen, zusammengesetzt.

Die WO 02/083824 A1 beschreibt Kompositzusammensetzungen für geforte Gegenstände, umfassend eine Zellulosefaser, ein thermoplastisches Bindemittel, ein Kopplungsagens, enthaltend Maleinsäureanhydrid und Maleinanhydridfunktionalitäten ebenso wie ein Gleitmittel, enthaltend Alcylester einer Carbonsäure.

Die vorliegende Erfindung zielt daher darauf ab, einen Verbundwerkstoff zur Verfügung zu stellen, welcher einerseits einen gegenüber herkömmlichen Verbundwerkstoffen, bestehend aus Basispolymeren und Zuschlagstoffen auf Basis von Partikeln oder Fasern aus nachwachsenden Rohstoffen erhöhte Schlagzähigkeit bzw. Kerbschlagzähigkeit aufweist, und andererseits eine gegenüber diesen herkömmlichen Verbundwerkstoffen wenigstens ebenso guten Materialverbund und Stoffeigenschaften zur Verfügung stellen können.

Zur Lösung dieser Aufgabe ist der erfindungsgemäße Verbundwerkstoff im Wesentlichen dadurch gekennzeichnet, dass weiterhin ein Benetzungsmittel gewählt aus einem Polyethylenglycol mit einem mittleren Molekulargewicht von 90 bis 40.000 und/oder einem mehrwertigen Alkohol enthalten ist und dass er 30 bis 95 Gew.-% Kunststoff-Basismaterial, 5 bis 70 Gew.-% Partikel oder Fasern aus nachwachsenden Rohstoffen, 0,5 bis 21 Gew.-% Benetzungsmittel sowie bis zu 20 Gew.-% Zuschlagstoffe enthält. Dadurch, dass ein Benetzungsmittel zugesetzt wird, werden zumindest die Naturfasern mit dem Benetzungsmittel imprägniert, wodurch es gelingt, die Faser in dem Verbundmaterial benetzt oder weich zu halten und somit zu erweichen, was im Falle einer Belastung zu einer höheren Dehnung bzw. Dehnfähigkeit der Faser führt. Eine höhere Dehnung bzw. Dehnfähigkeit der Faser hat weiterhin zur Folge, dass es beim Bruch zu einem erleichterten Faserauszug aus dem Verbund kommt und somit gleichzeitig eine verbesserte Schmier- bzw. Benetzungswirkung an der Grenzfläche zwischen Faser und Kunststoff erzielt wird, was in der Folge zu einer erhöhten Schlagzähigkeit bzw. Kerbschlagzähigkeit des gesamten Verbundwerkstoffs im Vergleich zu herkömmlichen Verbundwerkstoffen, bei welchen die Fasern keiner Imprägnierung unterzogen wurden, führt.

Besonders gute Ergebnisse werden gemäß der Erfindung dadurch erzielt, dass 30 bis 95 Gew.-% Kunststoffbasismaterial, gewählt aus Polypropylen, Polymilchsäure (PLA), Polymethylmetacrylat, ABS-Polycarbonat, Polyoxymethylen (POM), Polyethylen, eingesetzt werden, 5 bis 70 Gew.-% Partikel oder Fasern aus nachwachsenden Rohstoffen gewählt aus Zellulose, Holz, Regeneratzellulose, Hanf, Flachs, 0,5 bis 21 Gew.-% Benetzungsmittel, gewählt aus Polyethylenglycol, Glycerin, Sorbit, Diethylenglycol, 1,3-Propandial sowie weitere Zuschlagstoffe, gewählt aus Geruchsabsorbern, Verarbeitungshilfsmittel, UV-Stabilisatoren, farbgebenden Mitteln oder auch Haftvermittlern eingesetzt werden. Mit einem derartigen Verbundstoff bzw. mit derartigen Verbundstoffen gelingt es insbesondere, die Schlagzähigkeit bzw. Kerbschlagzähigkeit um 100 % oder sogar mehr % zu erhöhen. So gelingt es mit den erfindungsgemäßen Verbundwerkstoffen, Kerbschlagzähigkeiten im Bereich von 4,5 bis 14 kJ/m² zu erreichen. Verbundwerkstoffe mit derartigen Kerbschlagzähigkeiten können beispielsweise für die Automobilindustrie, Elektro/Elektronikindustrie, Logistikindustrie eingesetzt werden. Ein derartiger Einsatzzweck war mit herkömmlichen Materialien aufgrund der niedrigen Schlagzähigkeit bis dato nicht oder nur unzureichend möglich.

Insbesondere für Verbundwerkstoffe, welche höheren Temperaturen standhalten sollen, hat es sich als vorteilhaft erwiesen, dass als Benetzungsmittel ein Polyethylenglykol mit einem mittleren Molekulargewicht von 90 bis 40.000 eingesetzt wird. Durch Einsatz von Polyethylenglykol mit einem Molekulargewicht zwischen 90 und 40.000, insbesondere 120 bis 2.000 wird insbesondere die Schmierwirkung an der Grenzfläche zwischen Faser und Kunststoff deutlich erhöht, wodurch insgesamt auch die Schlagzähigkeit des Verbundwerkstoffs im Vergleich zu herkömmlichen Verbundwerkstoffen ohne Zusatz von niedermolekularen Polyethylenglycolen mit einem mittleren Molekulargewicht von 90 bis 40.000 deutlich verbessert ist.

Unter der Bezeichnung Benetzungsmittel werden im vorliegenden Zusammenhang verschiedene Alkohole, mehrwertige Alkohole oder Polyethylenglycol mit einem mittleren Molekulargewicht von 90 bis 40.000 gemeint, welche sich an der Oberfläche der Fasern anlagern und/oder in diese eindringen und somit die Fasern benetzen oder befeuchten und dadurch die Fasern in einem gegenüber dem unbenetzten Zustand weicheren Zustand halten.

Gemäß einer Weiterbildung der Erfindung ist der Verbundwerkstoff bevorzugt so ausgebildet, dass der als Benetzungsmittel eingesetzte, mehrwertige Alkohol aus Sorbitol, Glycerin, Diethylenglykol, Ethylenglycol, Propylenglycol, Butylenglycol, Tetramethylenglycol, Pentamethylenglycol oder Propandiol gewählt ist. Mehrwertige Alkohole aus der oben genannten Gruppe zeichnen sich dadurch aus, dass sie einerseits ausreichend wenig flüchtig sind und somit ein unbeabsichtigtes Abdampfen aus dem Verbundwerkstoff während der Verarbeitung und somit einer Störung der inneren Struktur mit Sicherheit vermieden werden kann und andererseits eine ausreichende Benetzung bzw. Befeuchtung der Fasern ermöglichen und somit den gewünschten Effekt der Erhaltung der Schlagzähigkeit erzielen lassen.

Besonders vorteilhafte Ergebnisse werden mit einem Verbundwerkstoff erzielt, in welchem das Benetzungsmittel in Mengen von 0,1 Gew.-% bis 6 Gew.-% des Gesamtverbundmaterials enthalten sind. Bei Einsatz derartiger Mengen gelingt es, die Schlagzähigkeit bzw. Kerbschlagzähigkeit im Vergleich zu Verbundwerkstoffen, welche kein Benetzungsmittel enthalten, deutlich zu erhöhen, insbesondere um bis 150 % zu erhöhen.

Besonders hohe Schlagzähigkeiten bzw. Kerbschlagzähigkeiten werden mit Verbundwerkstoffen erhalten, in welchen die Bestandteile in folgenden Verhältnissen enthalten sind: 30 bis 95 Gew.-% Kunststoff-Basismaterial, 5 bis 70 Gew.-% Partikel und Fasern aus nachwachsenden Rohstoffen, 0,5 bis 21 Gew.-% Benetzungsmittel sowie bis zu 20 Gew.-% Zuschlagstoffe. Durch ein Verbundmaterial, welches etwa doppelt so viel bis vier Mal so viel Kunststoff-Basismaterial, wie Partikel oder Fasern aus nachwachsenden Rohstoffen erhält und etwa 1 bis 30 %, insbesondere 10 bis 20 Gew.-% Benetzungsmittel in Bezug auf die eingesetzten Partikel oder Fasern aus nachwachsenden Rohstoffen enthält, gelingt es, die Schlagzähigkeit des mit Partikeln oder Fasern aus nachwachsenden Rohstoffen gefüllten Kunststoffs bzw. Verbundwerkstoffs noch weiter zu erhöhen.

Um ein Mischen und insbesondere ein unbeabsichtigtes Zerbrechen bzw. Ablösen von einzelnen Materialien bzw. ein Abtrennen der in dem Verbundwerkstoff enthaltenen Grundstoffe mit Sicherheit hintanzuhalten, ist das erfindungsgemäße Verbundmaterial dahingehend weitergebildet, dass die Zuschlagstoffe aus einem Haftvermittler, gewählt aus Maleinsäureanhydrid gepfropftem Polypropylen oder mit Maleinsäureanhydrid gepfropftem Polyethylen oder chemisch modifizierte Polyolefine, gewählt sind. Durch Einsatz von Haftvermittlern gelingt es, einen Verbundwerkstoff herzustellen, welcher auch hohen Belastungen standhält und insbesondere neben der erhöhten Kerbschlagzähigkeit auch eine ausreichende Verwindungssteifigkeit besitzt, ohne dass es zu einer Delaminierung der einzelnen Bestandteile kommt.

Die Erfindung zielt weiterhin auf ein Verfahren zur Herstellung von der erfindungsgemäßen Verbundwerkstoffe ab, mit welchem es rasch und zuverlässig gelingt, Verbundwerkstoffe enthaltend Partikel und Fasern aus nachwachsenden Rohstoffen herzustellen, welche sich durch eine im Vergleich zu herkömmlichen Materialien erhöhte Kerbschlagzähigkeit auszeichnen.

Zur Lösung dieser Aufgabe werden bei dem erfindungsgemäßen Verfahren im Wesentlichen in einer Mischvorrichtung bis zu 70 Gew.% eingebettete Partikel oder Fasern aus nachwachsenden Rohstoffen, gewählt aus Holzfasern, Abaca, Zellulosefasern, Zellstofffasern, Regeneratzellulosefasern, Hanffasern oder Flachsfasern mit bis zu 90 Gew.% eines Kunststoff-Basismaterials gewählt aus Polypropylen, Polymilchsäure (PLA), Polymethylmetacrylat, ABS-Polycarbonat, Polyoxymethylen (POM), Polyethylen, sowie gegebenenfalls bis zu 20 Gew.-% Zuschlagstoffen vermischt werden und in einer Formpresse oder einem Extruder zu einem Verbundwerkstoff verpresst werden, wobei zumindest die Partikel oder Fasern aus nachwachsenden Rohstoffen mit 0,5 bis 21 Gew.-% eines Benetzungsmittels imprägniert werden. Dadurch, dass die Partikel oder Fasern aus nachwachsenden Rohstoffen mit einem Benetzungsmittel imprägniert werden, wird eine Befeuchtung der Fasern vor bzw. während des Vermischens erreicht und somit eine Erweichung der Fasern erzielt, wodurch insgesamt eine höhere Dehnfähigkeit des mit den imprägnierten Partikeln oder Fasern aus nachwachsenden Rohstoffen hergestellten Verbundwerkstoffs erreicht werden kann.

Indem, wie dies einer bevorzugten Weiterbildung der vorliegenden Erfindung entspricht, das Verfahren so geführt wird, dass das Kunststoff-Basismaterial mit den Partikeln oder Fasern aus nachwachsenden Rohstoffen und wenigstens einem Teil des Benetzungsmittels in einem Innenmischer imprägniert wird, gelingt es einfach und rasch, sämtliche für die Ausbildung des Verbundwerkstoffs erforderlichen Bestandteile in Kontakt zu bringen und innig zu vermischen, um sowohl die ausreichende Benetzung der Partikel oder Fasern aus nachwachsenden Rohstoffen mit dem Benetzungsmittel sicherzustellen als auch sicherzustellen, dass eine Entmischung und ein unbeabsichtigtes Trennen der einzelnen den Verbundwerkstoff ausbildenden Bestandteile mit Sicherheit hintangehalten wird.

Indem, wie dies einer Weiterbildung entspricht, das Verfahren so geführt wird, dass die Partikel oder Fasern aus nachwachsenden Rohstoffen mit einem Teil des Benetzungsmittels imprägniert werden und anschließend die imprägnierten Partikel und Fasern aus nachwachsenden Rohstoffen in dem Innenmischer mit dem Kunststoff-Basismaterial sowie dem Rest des Benetzungsmittels sowie gegebenenfalls Zuschlagsstoffen vermischt werden, gelingt es einerseits sicherzustellen, dass eine ausreichende und gleichmäßige Benetzung der Partikel oder Fasern aus nachwachsenden Rohstoffen mit dem Benetzungsmittel erreicht wird und somit eine Befeuchtung und Erweichung der Partikel oder Fasern aus nachwachsenden Rohstoffen erzielt wird, und andererseits wird sichergestellt, dass sämtliche Materialien innig miteinander vermischt werden und so ein homogener und fester Verbund sämtlicher Materialien erzielt werden kann, welcher nach seiner Fertigstellung eine im Vergleich zu herkömmlichen Materialien deutlich erhöhte Schlagzähigkeit bzw. Kerbschlagzähigkeit aufweist.

Besonders gute Ergebnisse und insbesondere eine besonders deutliche Erhöhung der Kerbschlagzähigkeit wird dadurch erzielt, wenn das erfindungsgemäße Verfahren so geführt wird, dass die Partikel oder Fasern aus nachwachsenden Rohstoffen vor dem Einbringen in den Innenmischer mit 30 bis 60 Gew.-% des Benetzungsmittels imprägniert werden. Indem die Partikel oder Fasern aus nachwachsenden Rohstoffen vor dem Einbringen in den Innenmischer mit 30 bis 60 Gew.-% des insgesamt eingesetzten Benetzungsmittels imprägniert werden, kann eine ausreichende Befeuchtung der Partikel oder Fasern aus nachwachsenden Rohstoffen erreicht werden und gleichzeitig steht ausreichend Benetzungsmittel für einen homogenen Materialverbund zur Verfügung.

Gemäß einer Weiterbildung der Erfindung wird das Verfahren so geführt, dass die Zuschlagstoffe aus einem Haftvermittler, gewählt aus mit Maleinsäureanhydrid gepfropftem Polypropylen oder mit Maleinsäureanhydrid gepfropftem Polyethylen oder chemisch modifizierten Polyolefinen gewählt sind.

Eine noch bessere Verteilung und insbesondere ein noch günstigerer Effekt kann gemäß der Erfindung dadurch erzielt werden, wenn das Verfahren so geführt wird, dass nass aus einer Presse ausgetragene Partikel oder Fasern aus nachwachsenden Rohstoffen mit Benetzungsmittel imprägniert werden, bevor sie in den Innenmischer eingetragen werden. Mit einer derartigen Verfahrensführung gelingt eine noch gleichmäßigere Verteilung des Benetzungsmittels auf der Oberfläche der Partikel oder Fasern aus nachwachsenden Rohstoffen und somit kann ein Verbundmaterial hergestellt werden, welches im gesamten Volumen bzw. über die gesamte Oberfläche vollkommen homogene Eigenschaften aufweist.

Wie dies einer bevorzugten Weiterbildung des erfindungsgemäßen Verfahrens entspricht, wird dieses so geführt, dass das Materialgemisch aus dem Innenmischer einer Formpresse oder einem Extruder zugeführt wird und mit einem gegenüber Atmosphäre erhöhten Druck, insbesondere 5 bis 40 bar verpresst wird, wodurch nicht nur Produkte erhalten werden können, welche vollständig homogene Eigenschaften aufweisen, sondern insbesondere eine Vielzahl von beliebigen Formen bzw. Gegenständen mit dem erfindungsgemäßen Verbundwerkstoff hergestellt werden.

Die Erfindung wird nachfolgend anhand von Figuren oder Ausführungsbeispielen näher erläutert. In diesen zeigen
Fig. 1 ein Diagramm, welches die Veränderung der Kerbschlagzähigkeit durch Zusatz unterschiedlicher Benetzungsmittel zeigt,
Fig. 2 ein Blockdiagramm, welches Veränderungen der Kerbschlagzähigkeit bei Zugabe unterschiedlicher Mengen von Benetzungsmitteln zeigt, und

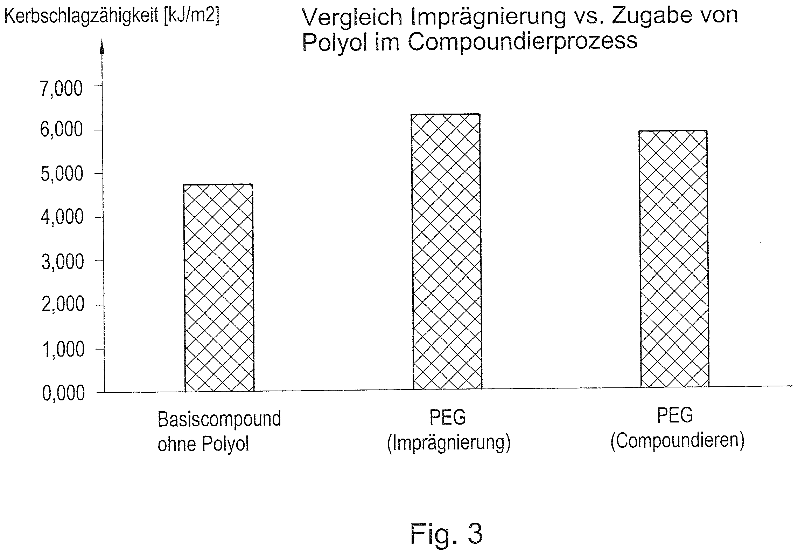

Fig. 3 einen Vergleich des Einflusses der unterschiedlichen Verfahrensführung auf die Kerbschlagzähigkeit eines Endprodukts.

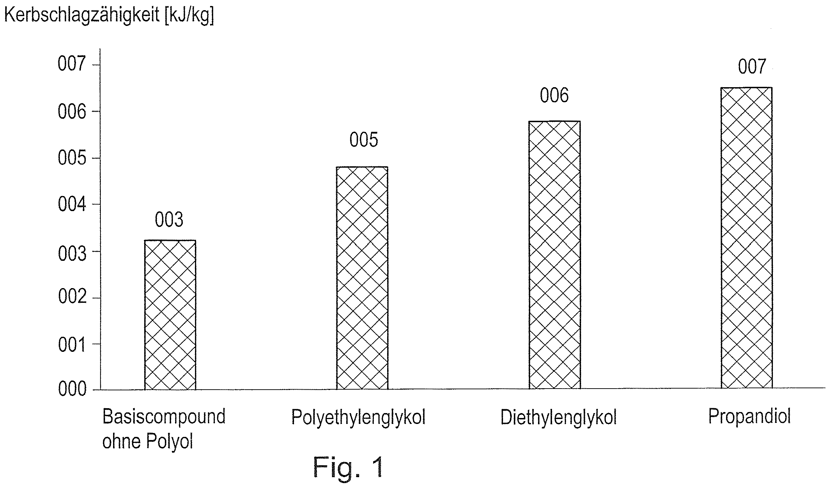

Beispiel 1: Zur Herstellung eines Verbundwerkstoffs gemäß der Erfindung werden die Ausgangstoffe eines Verbundmaterials, nämlich 80 Gew.-% Polypropylen und 20 Gew.-% Zellulosefasern bei 180 °C 4 Minuten in einem Innenmischer geknetet und zu einem Verbundwerkstoff verpresst. Die Kerbschlagzähigkeit dieses so hergestellten Verbundwerkstoffs wurde mit 3,27 kJ/m² bestimmt. Das Ausgangsmaterial wurde in der Folge so verändert, dass 2 Gew.-% des Polypropylens durch ein Benetzungsmittel ersetzt wurden und mit derselben Verfahrensführung Verbundwerkstoffe hergestellt wurden. Bei Zusatz von 2 Gew.-% Polyethylenglycol gelingt es, die Kerbschlagzähigkeit auf 4,77 kJ/m² zu erhöhen, bei Zusatz von 2 Gew.-% Diethylenglycol wird die Kerbschlagzähigkeit auf 5,79 kJ/m² erhöht und bei Zusatz von Propandiol gelingt es, die Kerbschlagzähigkeit auf 6,51 kJ/m² zu erhöhen, wie dies der beiliegenden Fig. 1 zu entnehmen ist.

Beispiel 2: Die Vorgangsweise von Beispiel 1 wird wiederholt, mit der Ausnahme, dass die Menge des eingesetzten Benetzungsmittels variiert wird, um den Einfluss der Menge eines Benetzungsmittels auf die Kerbschlagzähigkeit erkennen zu können.

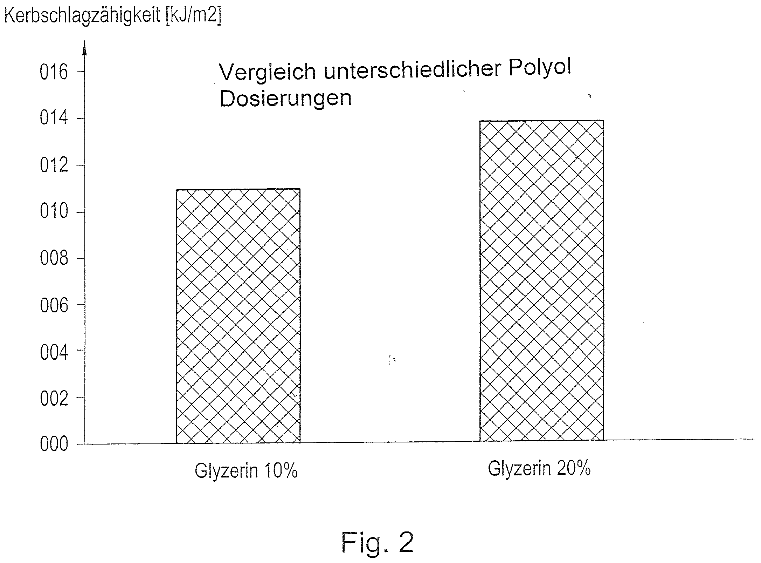

In das Ausgangsmaterial von Beispiel 1 wurden 2 Gew.-% Glyzerin als Benetzungsmittel eingemischt, worauf eine Kerbschlagzähigkeit von 10,55 kJ/m² erreicht wurde. Bei Zusatz zu derselben Ausgangsmischung von 4 Gew.-% Glyzerin ergibt sich eine Erhöhung der Kerbschlagzähigkeit auf 13,82 kJ/m², wie dies Fig. 2 entnehmbar ist. Aus diesem Vergleich ist erkennbar, dass bei Erhöhung der Zugabemenge auch eine Erhöhung der Kerbschlagzähigkeit erreicht werden kann.

Beispiel 3: Es wurde ein Basisverbundmaterial, wie in Beispiel 1 beschrieben, hergestellt, ohne Zusatz eines Benetzungsmittels. Dieses so hergestellte Basisverbundmaterial wurde mit einem Verbundmaterial verglichen, welches 20 % Faseranteil und 2 % Benetzungsmittel enthält, wobei die Verfahrensführung ein Mal, wie in Beispiel 1 beschrieben, gewählt wurde, bei welchem Verfahren eine Kerbschlagzähigkeit von 5,85 kJ/m² erreicht wurde, im Vergleich zu einer Kerbschlagzähigkeit von 4,75 kJ/m² bei einem Verbundmaterial ohne Zusatz von Benetzungsmittel. Das Benetzungsmittel war hierbei ein Polyethylenglycol mit einem mittleren Molekulargewicht von 150 gewählt.

Schließlich wurde in einer anderen Verfahrensführung das Polyethylenglycol vor dem Einbringen in den Innenmischer zur Imprägnierung der Zellulosefasern verwendet und die derartig imprägnierten Zellulosefasern in der Folge in den Innenmischer eingetragen und mit dem Kunststoffbasismaterial, wie in Beispiel 1 beschrieben, vermischt und zu einem Verbundmaterial verpresst. Ein derart hergestelltes Verbundmaterial zeigte im Vergleich zu dem in Fig. 1 beschriebenen Herstellungsverfahren eine Kerbschlagzähigkeit von 6,23 kJ/m² im Vergleich zu 5,85 kJ/m² bei der Verfahrensführung von Beispiel 1. Aus diesen Ergebnissen lässt sich ersehen, dass in Abhängigkeit von der gewählten Verfahrensführung der Kerbschlagzähigkeit weiter erhöht werden kann.

In Beispielen 4 bis 8 wurde die Verfahrensführung von Beispiel 1 beibehalten und die Entwicklung der Kerbschlagzähigkeit von Verbundmaterialien mit unterschiedlichsten Partikeln oder Fasern aus nachwachsenden Rohstoffen und mit verschiedenen Benetzungsmitteln untersucht.

Die Kerbschlagzähigkeitswerte wurden hierbei ebenso wie bei den vorangegangenen Beispielen bei 23 °C gemessen.

Beispiel 4: Ein Verbundmaterial aus 45 Gew.-% Polypropylen, 50 Gew.-% Holzfasern sowie 5 Gew.-% Polyethylenglycol wurde zu einem Verbundwerkstoff, wie in Beispiel 1 beschrieben, verarbeitet. Die bei Raumtemperatur (23 °C) gemessene Kerbschlagzähigkeit betrug bei der in Beispiel 4 eingesetzten Zusammensetzung 6,46 kJ/m², bei einem vergleichbaren Verbundmaterial ohne Zusatz von Benetzungsmittel, d.h. ohne Zusatz von Polyethylenglycol 3,4 kJ/m².

Beispiel 5: Ein Verbundmaterial aus 67 Gew.-% Polypropylen, 30 Gew.-% Hanffasern sowie 3 Gew.-% Propandiol wurde zu einem Verbundwerkstoff, wie in Beispiel 1 beschrieben, verarbeitet. Die bei Raumtemperatur (23 °C) gemessene Kerbschlagzähigkeit betrug. Bei der in Beispiel 5 eingesetzten Zusammensetzung 5,5 kJ/m² bei einem vergleichbaren Verbundmaterial ohne Zusatz von Benetzungsmittel, d.h. ohne Zusatz von Propandiol 2,2 kJ/m².

Beispiel 6: Ein Verbundmaterial aus 67 Gew.-% Polypropylen, 30 Gew.-% Reisschalen sowie 3 Gew.-% Glycerin wurde zu einem Verbundwerkstoff, wie in Beispiel 1 beschrieben, verarbeitet. Die bei Raumtemperatur (23 °C) gemessene Kerbschlagzähigkeit betrug bei der in Beispiel 6 eingesetzten Zusammensetzung 3,2 kJ/m², bei einem vergleichbaren Verbundmaterial ohne Zusatz von Benetzungsmittel, d.h. ohne Zusatz von Glycerin 2,1 kJ/m².

Beispiel 7: Ein Verbundmaterial aus 67 Gew.-% Polypropylen, 30 Gew.-% Flachsfasern sowie 3 Gew.-% Glycerin wurde zu einem Verbundwerkstoff, wie in Beispiel 1 beschrieben, verarbeitet. Die bei Raumtemperatur (23 °C) gemessene Kerbschlagzähigkeit betrug bei der in Beispiel 7 eingesetzten Zusammensetzung 6,1 kJ/m², bei einem vergleichbaren Verbundmaterial ohne Zusatz von Benetzungsmittel, d.h. ohne Zusatz von Glycerin 3,2 kJ/m².

Beispiel 8: Ein Verbundmaterial aus 67 Gew.-% Polypropylen, 30 Gew.-% Viskosefasern sowie 3 Gew.-% Polyethylenglycol wurde zu einem Verbundwerkstoff, wie in Beispiel 1 beschrieben, verarbeitet. Die bei Raumtemperatur (23 °C) gemessene Kerbschlagzähigkeit betrug bei der in Beispiel 8 eingesetzten Zusammensetzung 6,2 kJ/m², bei einem vergleichbaren Verbundmaterial ohne Zusatz von Benetzungsmittel, d.h. ohne Zusatz von Polyethylenglycol 4 kJ/m².

## Patentansprüche

1. Verbundwerkstoff bestehend aus einem Kunststoff-Basismaterial gewählt aus Polypropylen, Polymilchsäure (PLA), Polymethylmetacrylat, ABS-Polycarbonat, Polyoxymethylen (POM), Polyethylen, und darin eingebetteten Partikel oder Fasern aus nachwachsenden Rohstoffen, wie Holzfasern, Abaca, Zellulosefasern, Zellstofffasern, Regeneratzellulosefasern, Hanffasern oder Flachsfasern sowie gegebenenfalls einem Haftvermittler, **dadurch gekennzeichnet, dass** weiterhin ein Benetzungsmittel gewählt aus einem Polyethylenglycol mit einem mittleren Molekulargewicht von 90 bis 40.000 und/oder einem mehrwertigen Alkohol enthalten ist und dass er 30 bis 95 Gew.-% Kunststoff-Basismaterial, 5 bis 70 Gew.-% Partikel oder Fasern aus nachwachsenden Rohstoffen, 0,5 bis 21 Gew.-% Benetzungsmittel sowie bis zu 20 Gew.-% Zuschlagstoffe enthält.

2. Verbundwerkstoff nach Anspruch 1, **dadurch gekennzeichnet, dass** der mehrwertige Alkohol aus Sorbitol, Glycerin, Diethylenglykol, Ethylenglycol, Propylenglycol, Butylenglycol, Tetramethylenglycol, Pentamethylenglycol oder Propandiol gewählt ist.

3. Verbundwerkstoff nach Anspruch 1 oder 2, **dadurch gekennzeichnet, dass** von 0,1 Gew.-% bis 21 Gew.-% Benetzungsmittel enthalten sind.

4. Verbundwerkstoff nach Anspruch 1, 2 oder 3, **dadurch gekennzeichnet, dass** die Zuschlagstoffe aus einem Haftvermittler, gewählt aus mit Maleinsäureanhydrid gepfropftem Polypropylen oder mit Maleinsäureanhydrid gepfropftem Polyethylen oder chemisch modifizierte Polyolefine gewählt sind.

5. Verbundwerkstoff nach einem der Ansprüche 1 bis 4, **dadurch gekennzeichnet, dass** der Verbundwerkstoff eine Kerbschlagzähigkeit von 2 bis 30 kJ/m² aufweist.

6. Verbundwerkstoff nach einem der Ansprüche 1 bis 5, **dadurch gekennzeichnet, dass** das Benetzungsmittel in einer Menge von 1 bis 30 Gew.-%, insbesondere 10 bis 20 Gew.-% in Bezug auf die Menge der Partikel oder Fasern aus nachwachsenden Rohstoffen enthalten ist.

7. Verfahren zur Herstellung eines Verbundwerkstoffs, bei welchem in einer Mischvorrichtung 5 bis 70 Gew.% eingebettete Partikel oder Fasern aus nachwachsenden Rohstoffen, gewählt aus Holzfasern, Abaca, Zellulosefasern, Zellstofffasern, Regeneratzellulosefasern, Hanffasern oder Flachsfasern mit 30 bis 95 Gew.% eines Kunststoff-Basismaterials gewählt aus Polypropylen, Polymilchsäure (PLA), Polymethylmetacrylat, ABS-Polycarbonat, Polyoxymethylen (POM), Polyethylen, sowie gegebenenfalls bis zu 20 Gew.-% Zuschlagstoffen vermischt werden und in einer Formpresse oder einem Extruder zu einem Verbundwerkstoff verpresst werden, wobei zumindest die Partikel oder Fasern aus nachwachsenden Rohstoffen mit 0,5 bis 21 Gew.-% eines Benetzungsmittels imprägniert werden.

8. Verfahren nach Anspruch 7, **dadurch gekennzeichnet, dass** das Kunststoff-Basismaterial mit den Partikeln oder Fasern aus nachwachsenden Rohstoffen und wenigstens einem Teil des Benetzungsmittels in einem Innenmischer imprägniert werden.

9. Verfahren nach Anspruch 7 oder 8, **dadurch gekennzeichnet, dass** die Partikel oder Fasern aus nachwachsenden Rohstoffen mit einem Teil des Benetzungsmittels imprägniert werden, dass die imprägnierten Partikel oder Faser aus nachwachsenden Rohstoffen in dem Innenmischer mit dem Kunststoff-Basismaterial sowie dem Rest des Benetzungsmittels sowie gegebenenfalls Zuschlagstoffen vermischt werden.

10. Verfahren nach Anspruch 7, 8 oder 9, **dadurch gekennzeichnet, dass** die Partikel oder Fasern aus nachwachsenden Rohstoffen vor dem Einbringen in den Innenmischer mit 0,5 bis 30 Gew.-% des Benetzungsmittels imprägniert werden.

11. Verfahren nach einem der Ansprüche 7 bis 10, **dadurch gekennzeichnet, dass** nass aus einer Presse ausgetragene nasse Zellstofffasern mit Benetzungsmittel imprägniert werden.

12. Verfahren nach einem der Ansprüche 7 bis 11 **dadurch gekennzeichnet, dass** das Materialgemisch aus dem Innenmischer einer Formpresse oder einem Extruder zugeführt wird und verpresst wird.

13. Verfahren nach einem der Ansprüche 7 bis 12, **dadurch gekennzeichnet, dass** die Zuschlagstoffe aus einem Haftvermittler, gewählt aus mit Maleinsäureanhydrid gepfropftem Polypropylen oder mit Maleinsäureanhydrid gepfropftem Polyethylen oder chemisch modifizierten Polyolefinen gewählt werden.

## Claims

1. A composite material made of a plastic base material selected from polypropylene, polylactic acid (PLA), polymethylmetacrylate, ABS polycarbonate, polyoxymethylene (POM), polyethylene, and particles or fibers of renewable raw materials such as wood fibers, abaca, cellulose fibers, pulp fibers, regenerated cellulose fibers, hemp fibers or flax fibers embedded therein, and optionally a bonding agent, **characterized in that** it further contains a wetting agent selected from a polyethylene glycol with an average molecular weight of 90 to 40,000 and/or a polyvalent alcohol, and that it comprises 30 to 95 wt% plastic base material, 5 to 70 wt% particles or fibers of renewable raw materials, 0.5 to 21 wt% wetting agent, and up to 20 wt% additives..

2. A composite material according to claim 1, **characterized in that** the polyvalent alcohol is selected from sorbitol, glycerin, diethylene glycol, ethylene glycol, propylene glycol, butylene glycol, tetramethylene glycol, pentamethylene glycol or propanediol.

3. A composite material according to claim 1 or 2, **characterized in that** 0.1 wt% to 21 wt% wetting agent are contained.

4. A composite material according to claim 1, 2 or 3, **characterized in that** the additives are selected from a bonding agent selected from polypropylene grafted with maleic anhydride, or polyethylene grafted with maleic anhydride, or chemically modified polyolefins.

5. A composite material according to any one of claims 1 to 4, **characterized in that** the composite material has a notched impact strength of 2 to 30 kJ/m².

6. A composite material according to any one of claims 1 to 5, **characterized in that** the wetting agent is contained in an amount of 1 to 30 wt%, in particular 10 to 20 wt%, based on the amount of particles or fibers of renewable raw materials.

7. A method for producing a composite material, in which 5 to 70 wt% of embedded particles or fibers of renewable raw materials selected from wood fibers, abaca, cellulose fibers, pulp fibers, regenerated cellulose fibers, hemp fibers or flax fibers are mixed in a mixing device with 30 to 95 wt% of a plastic base material selected from polypropylene, polylactic acid (PLA), polymethylmetacrylate, ABS polycarbonate, polyoxymethylene (POM), polyethylene, and optionally up to 20 wt% additives, and pressed into a composite material in a molding press or an extruder, whereby at least the particles or fibers of renewable raw materials are impregnated with 0,5 to 21 wt% a wetting agent.

8. A method according to claim 7, **characterized in that** the plastic base material is impregnated with the particles or fibers of renewable raw materials and at least a portion of the wetting agent in an internal mixer.

9. A method according to claim 7 or 8, **characterized in that** the particles or fibers of renewable raw materials are impregnated with a portion of the wetting agent, and that the impregnated particles or fibers of renewable raw materials are mixed in the internal mixer with the plastic base material and the remaining wetting agent, and optionally additives.

10. A method according to claim 7, 8 or 9, **characterized in that** the particles or fibers of renewable raw materials are impregnated with 0.5 to 30 wt% of the wetting agent prior to being introduced into the internal mixer.

11. A method according to any one of claims 7 to 10, **characterized in that** wet cellulose fibers discharged wet from a press are impregnated with wetting agent.

12. A method according to any one of claims 7 to 11, **characterized in that** the material mixture from the internal mixer is supplied to a molding press or an extruder and pressed.

13. A method according to any one of claims 7 to 12, **characterized in that** the additives are selected from a bonding agent selected from polypropylene grafted with maleic anhydride, or polyethylene grafted with maleic anhydride, or chemically modified polyolefins.

## Revendications

1. Matériau composite constitué d'une matière de base en plastique choisie parmi le polypropylène, l'acide polylactique (PLA), le polyméthacrylate de méthyle, l'ABS-polycarbonate, le polyoxyméthylène (POM), le polyéthylène, et de particules ou fibres incorporées dans celles-ci en matières premières renouvelables comme les fibres de bois, l'abaca, les fibres de cellulose, les fibres de matière cellulosique, les fibres de cellulose recyclée, les fibres de chanvre ou les fibres de lin, ainsi qu'éventuellement d'un promoteur d'adhérence, **caractérisé en ce qu'**un agent mouillant choisi parmi un polyéthylène glycol ayant un poids moléculaire moyen de 90 à 40 000 et/ou un alcool polyvalent est en outre présent, et **en ce qu'**il comprend 30 à 95 % en poids de matière de base en plastique, 5 à 70 % en poids de particules ou de fibres en matières premières renouvelables, 0,5 à 21 % en poids d'agent mouillant et jusqu'à 20 % en poids d'additifs.

2. Matériau composite selon la revendication 1, **caractérisé en ce que** l'alcool polyvalent est choisi parmi le sorbitol, la glycérine, le diéthylène glycol, l'éthylène glycol, le propylène glycol, le butylène glycol, le tétraméthylène glycol, le pentaméthylène glycol ou le propanediol.

3. Matériau composite selon la revendication 1 ou 2, **caractérisé en ce que** 0,1 % en poids à 21 % en poids d'agent mouillant sont présents.

4. Matériau composite selon la revendication 1, 2 ou 3, **caractérisé en ce que** les additifs sont choisis parmi un promoteur d'adhérence choisi parmi le polypropylène greffé par un anhydride d'acide maléique ou le polyéthylène greffé par un anhydride d'acide maléique ou des polyoléfines modifiées chimiquement.

5. Matériau composite selon l'une des revendications 1 à 4, **caractérisé en ce que** le matériau composite présente une résistance aux chocs sur éprouvette entaillée de 2 à 30 kJ/m².

6. Matériau composite selon l'une des revendications 1 à 5, **caractérisé en ce que** l'agent mouillant est présent en une quantité de 1 à 30 % en poids, en particulier 10 à 20 % en poids par rapport à la quantité de particules ou de fibres en matières premières renouvelables.

7. Procédé de fabrication d'un matériau composite, selon lequel on mélange, dans un dispositif de mélange, 5 à 70 % en poids de particules ou de fibres incorporées en matières premières renouvelables choisies parmi les fibres de bois, l'abaca, les fibres de cellulose, les fibres de matière cellulosique, les fibres de cellulose recyclée, les fibres de chanvre ou les fibres de lin avec 30 à 95 % en poids d'une matière de base en plastique choisie parmi le polypropylène, l'acide polylactique (PLA), le polyméthacrylate de méthyle, l'ABS-polycarbonate, le polyoxyméthylène (POM), le polyéthylène, ainsi qu'éventuellement jusqu'à 20 % en poids d'additifs et on les compresse dans une presse de formage ou dans une extrudeuse pour donner un matériau composite, dans lequel au moins les particules ou les fibres en matières premières renouvelables sont imprégnées avec 0,5 à 21 % en poids d'un agent mouillant.

8. Procédé selon la revendication 7, **caractérisé en ce que** le matériau de base en plastique est imprégné dans un mélangeur interne avec les particules ou les fibres en matières premières renouvelables et au moins une partie de l'agent mouillant.

9. Procédé selon la revendication 7 ou 8, **caractérisé en ce que** les particules ou les fibres en matières premières renouvelables sont imprégnées avec une partie de l'agent mouillant, **en ce que** les particules ou fibres en matières premières renouvelables imprégnées sont mélangées dans le mélangeur interne avec la matière de base en plastique et le reste de l'agent mouillant et éventuellement des additifs.

10. Procédé selon la revendication 7, 8 ou 9, **caractérisé en ce que** les particules ou les fibres en matières premières renouvelables sont imprégnées avec 0,5 à 30 % en poids d'agent mouillant avant l'incorporation dans le mélangeur interne.

11. Procédé selon l'une des revendications 7 à 10, **caractérisé en ce que** les fibres de matière cellulosique humides extraites d'une presse par voie humide sont imprégnées avec l'agent mouillant.

12. Procédé selon l'une des revendications 7 à 11, **caractérisé en ce que** le mélange de matières provenant du mélangeur interne est amené à une presse de formage ou une extrudeuse et compressé.

13. Procédé selon l'une des revendications 7 à 12, **caractérisé en ce que** les additifs sont choisis parmi un promoteur d'adhérence choisi parmi le polypropylène greffé par un anhydride d'acide maléique ou le polyéthylène greffé par un anhydride d'acide maléique ou des polyoléfines modifiées chimiquement.
